# EUROPÄISCHE PATENTSCHRIFT

(11) **EP 0 632 772 B1**
(45) Veröffentlichungstag und Bekanntmachung des Hinweises auf die Patenterteilung: **13.12.1995**
(21) Anmeldenummer: 93907840.8
(22) Anmeldetag: 27.03.1993
(51) Int. Cl.: B62D 5/083

(54) **DREHSCHIEBERVENTIL FÜR HILFSKRAFTLENKUNGEN VON KRAFTFAHRZEUGEN**
ROTARY SLIDE VALVE FOR POWER-ASSISTED STEERING OF MOTOR VEHICLES
SOUPAPE A TIROIR ROTATIF POUR DIRECTIONS ASSISTEES DE VEHICULES A MOTEUR

(30) Priorität: 01.04.1992 DE 4210697
(43) Veröffentlichungstag der Anmeldung: 11.01.1995
(73) Patentinhaber: ZF FRIEDRICHSHAFEN Aktiengesellschaft, 88038 Friedrichshafen (DE)
(72) Erfinder: BREITWEG, Werner, D-7070 Schwäbisch Gmünd (DE)
(86) Internationale Anmeldenummer: EP9300750
(87) Internationale Veröffentlichungsnummer: WO9319971

(56) Entgegenhaltungen:
- GB-A- 1 114 779
- US-A- 3 746 045
- US-A- 4 465 101

## Beschreibung

Die Erfindung betrifft ein Drehschieberventil für Hilfskraftlenkungen von Kraftfahrzeugen nach dem Oberbegriff des Anspruches 1. Das Drehschieberventil enthält zwei Ventilelemente, die koaxial ineinander beweglich angeordnet sind und maximal um den Verdrehweg einer Totgangkupplung relativ zueinander verdrehbar sind. Dabei ist das erste Ventilelement mit einem Ventil-Eingangsglied drehfest verbunden und das zweite Ventilelement mit einem Ventil-Ausgangsglied über eine Totgangkupplung verbunden. Das erste Ventilelement ist mit dem Ventil-Ausgangsglied über einen Torsionsstab verbunden. Beide Ventilelemente weisen Steuer-Längsnuten auf, die wenigstens zu einem Teil in ihrer axialen Länge begrenzt sind und miteinander zusammenwirken zur Steuerung eines Druckmittels zu und von zwei Arbeitsräumen eines Servomotors.

Ein derartiges Drehschieberventil ist beispielsweise bekannt aus dem US-Patent 37 46 045. Das bekannte Drehschieberventil enthält, ebenso wie andere bekannte Drehschieberventile, einen Drehschieber, der in einer Axialbohrung einer Steuerbüchse geführt ist. Der Drehschieber ist mit einem Ventil-Ausgangsglied über einen Torsionsstab verbunden. Außerdem ist der Drehschieber über eine Totgangkupplung mit dem Ventil-Ausgangsglied verbunden. Eine solche Totgangkupplung begrenzt die relative Verdrehung der beiden Ventilelemente zueinander und schafft einen mechanischen Anschlag des Ventiles nach Aufbrauch des Verdrehweges der Totgangkupplung. Über diesen mechanischen Anschlag muß bei einem Ausfall der Hilfskraftunterstützung die gesamte mechanische Lenkkraft übertragen werden können. Aus diesen Betriebsbedingungen ergeben sich die Abmessungen der Totgangkupplung und damit der beiden Ventilelemente und des gesamten Drehschieberventils. Die Außenabmessungen des Drehschieberventils, die durch die möglichen hohen mechanischen Beanspruchungen bedingt sind, sind häufig zu groß für den begrenzten Einbauraum in einem Kraftfahrzeug.

Der Erfindung liegt deshalb die Aufgabe zugrunde, die Abmessungen eines bekannten Drehschieberventils zu verringern und die Lenkeigenschaften der Hilfskraftlenkung zu verbessern.

Diese Aufgabe wird durch das im Anspruch 1 gekennzeichnete Drehschieberventil gelöst. Weitere vorteilhafte und zweckmäßige Ausgestaltungen der Erfindung sind in den Unteransprüchen angegeben. Die Lösung besteht insbesondere darin, daß der Drehschieber nicht das innere, sondern das äußere Ventilelement ist, so daß die Steuerbüchse als zweites Ventilelement im Inneren des Drehschiebers in einer Axialbohrung geführt ist. Diese Anordnung wird insbesondere dadurch erreicht, daß die Steuerbüchse in einem spanlosen Fertigungsverfahren hergestellt wird. Die Steuerbüchse kann dabei mit ihren Steuernuten und Steuerkanten durch Kaltumformen fertig hergestellt werden. Durch das spanlose Fertigungsverfahren kann die Steuerbüchse sehr dünnwandig aus Blech hergestellt werden. Trotz der Dünnwandigkeit erhält man wegen des günstigen Materialflusses eine sehr stabile Steuerbüchse, die in ihren Außenabmessungen wesentlich kleiner ist als vergleichbare, bisher bekannte Teile. Durch die Reduzierung der Ventildurchmesser ergibt sich eine wesentlich geringere Ventilreibung und damit ein verbessertes Lenkgefühl.

Die Totgangkupplung wird durch eine Innenverzahnung des Drehschiebers und durch eine Außenverzahnung des Ventil-Ausgangsgliedes gebildet und liegt dadurch auf einem relativ großen Durchmesser, der eine sichere Mitnahme auch bei einem Ausfall der Hilfskraftunterstützung gewährleistet. Da der Drehschieber mit seiner Außenumfangsfläche direkt in dem Ventilgehäuse geführt ist und deshalb an seiner äußeren Umfangsfläche die erforderlichen Ringnuten für die Anschlüsse der Servopumpe, des Behälters und des Servomotors aufweisen muß, ist es möglich, zwischen diesen Ringnuten Dichtringe anzuordnen. Wenigstens zwei der üblicherweise vorhandenen vier Dichtringe sind mit dem Arbeitsdruck beaufschlagt, werden deshalb verstärkt in Anlage an die Bohrung des Ventilgehäuses gedrückt und wirken dadurch in vorteilhafter Weise dämpfend.

Wird der Drehschieber über zwei Wälzlager in dem Ventilgehäuse gelagert, so werden die Lenkeigenschaften dadurch weiter verbessert, daß das Drehschieberventil querkraftfrei arbeitet. Außerdem kann dann der Dichtspalt zwischen dem Drehschieber und dem Ventilgehäuse stark verkleinert werden. Dadurch können die Dichtringe bei hohen Drücken und hohen Temperaturen nicht mehr in den Dichtspalt hineingedrückt und zerstört werden.

Im folgenden wird die Erfindung anhand eines in der Zeichnung dargestellten Ausführungsbeispieles näher erläutert. Es zeigt
- Fig. 1: einen Längsschnitt durch das erfindungsgemäße Drehschieberventil mit einem schematisch dargestellten, zugehörigen Lenkgetriebe;
- Fig. 2: den Querschnitt durch das Drehschieberventil gemäß der Linie II-II in Fig. 1 in vergrößertem Maßstab.

Ein Drehschieberventil 1 ist in einem Ventilgehäuse 2 einer Hilfskraftlenkung 3 enthalten.

Das Drehschieberventil 1 enthält ein erstes Ventilelement in der Form eines Drehschiebers 4, der in einer Ventilbohrung 5 des Ventilgehäuses 2 drehbar geführt ist. Der Drehschieber 4 weist eine Axialbohrung 6 auf, in der ein zweites Ventilelement in der Form einer Steuerbüchse 7 drehbar geführt ist. Der Drehschieber 4 liegt also radial außen, während die Steuerbüchse 7 radial innen liegt.

Der Drehschieber 4 weist an seiner äußeren Mantelfläche Ringnuten 8, 10, 11 auf, an die eine Servopumpe 12 bzw. zwei Arbeitsräume 13 und 14 eines Servomotors 15 angeschlossen sind. Die Ringnuten 8, 10, 11 sind durch Dichtringe 16 gegenüber der Ventilbohrung 5 abgedichtet. Der Drehschieber 4 ist in dem Ventilgehäuse 2 durch zwei Wälzlager 17 und 18 gelagert. In seiner Axialbohrung 6 weist der Drehschieber 4 Steuer-Längsnuten 20 auf, die in ihrer axialen Länge begrenzt sind und die zusammenwirken mit Steuer-Längsnuten 21, die an der äußeren Mantelfläche der Steuerbüchse 7 angeordnet sind. Ein Teil der Steuer-Längsnuten 21 ist nach beiden Enden der Steuerbüchse 7 hin abgeschlossen. Einige der Steuer-Längsnuten 21 sind nach einem Ende der Steuerbüchse 7 hin offen und stehen in Verbindung mit einem Druckmittelbehälter 22, aus dem die Servopumpe 12 Druckmittel ansaugt.

Der Drehschieber 4 ist drehfest mit einem Ventil-Eingangsglied verbunden, das als Lenkspindelanschluß 23 ausgebildet ist. Der Lenkspindelanschluß 23 ist beispielsweise mit einer nicht dargestellten Lenkspindel über ein ebenfalls nicht dargestelltes Kreuzgelenk verbunden. Der Drehschieber 4 ist außerdem über eine Totgangkupplung 24 mit einem Ventil-Ausgangsglied 25 verbunden. Die Totgangkupplung 24 besteht beispielsweise aus einer Innenverzahnung am Drehschieber 4 und einer Außenverzahnung an dem Ventil-Ausgangsglied 25. Das Ventil-Ausgangsglied 25 stellt gleichzeitig ein Eingangsglied für den mechanischen Teil der Hilfskraftlenkung 3 dar und ist beispielsweise mit einem Ritzel 26 verbunden. Das Ritzel 26 ist in einem Lenkgehäuse 27 drehbar gelagert und wirkt zusammen mit einer Zahnstange 28, die in dem Lenkgehäuse 27 axial verschiebbar geführt ist.

Der Drehschieber 4 ist außerdem über einen Torsionsstab 30 mit dem Ventil-Ausgangsglied 25 verbunden. Das Ventil-Ausgangsglied 25 seinerseits ist über einen Stift 31 drehfest mit der Steuerbüchse 7 verbunden, die an ihrem einen Ende in einer Axialbohrung des Ventil-Ausgangsgliedes 25 aufgenommen ist.

Durch diese unterschiedlichen Verbindungen ist eine begrenzte Verdrehung zwischen dem Drehschieber 4 und der Steuerbüchse 7 möglich. Durch diese Verdrehung zwischen den beiden Ventilelementen wird das von der Servopumpe 12 geförderte Druckmittel dem jeweiligen Arbeitsraum 13 bzw. 14 des Servomotors 15 zugeführt und von dem entsprechend anderen Arbeitsraum 14 bzw. 13 zurück zu dem Druckmittelbehälter 22 geleitet.

Die Steuerbüchse 7 ist erfindungsgemäß in einem spanlosen Herstellungsverfahren hergestellt. Wegen ihrer einfachen Form und Anordnung läßt sich die Steuerbüchse 7 einschließlich der Steuer-Längsnuten 21 und den daran angeordneten Steuerkanten kostengünstig durch Kaltumformen fertig herstellen.

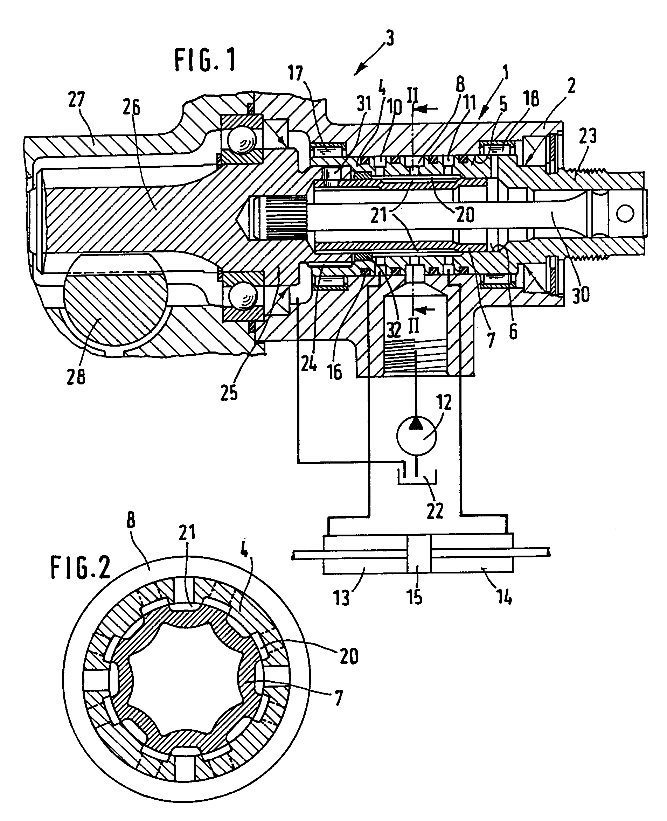

Die innenliegenden Steuer-Längsnuten 20 des Drehschiebers 4 lassen sich spanabhebend, z. B. durch Stoßen, herstellen. Die offenen Enden der Steuer-Längsnuten 20 werden dann durch einen Endring 32 verschlossen, wie dies in Fig. 1 dargestellt ist. Die Steuer-Längsnuten 20 des Drehschiebers 4 lassen sich jedoch auch durch Kaltumformen herstellen, beispielsweise durch Kaltfließpressen oder Kneten. Der Abschluß der Steuer-Längsnuten 20 ist bei diesen letztgenannten Verfahren automatisch mit eingeformt. Ebenso ist dies bei verschiedenen bekannten, spanabhebenden Verfahren möglich.

Wird der Drehschieber 4 durch Kaltumformen hergestellt, so kann gleichzeitig die Innenverzahnung der Totgangkupplung 24 gefertigt werden.

### Bezugszeichen

- 1: Drehschieberventil
- 2: Ventilgehäuse
- 3: Hilfskraftlenkung
- 4: Drehschieber
- 5: Ventilbohrung
- 6: Axialbohrung
- 7: Steuerbüchse
- 8: Ringnut
- 9: -
- 10: Ringnut
- 11: Ringnut
- 12: Servopumpe
- 13: Arbeitsraum
- 14: Arbeitsraum
- 15: Servomotor
- 16: Dichtring
- 17: Wälzlager
- 18: Wälzlager
- 19: -
- 20: Steuer-Längsnut
- 21: Steuer-Längsnut
- 22: Druckmittelbehälter
- 23: Lenkspindelanschluß
- 24: Totgangkupplung
- 25: Ventil-Ausgangsglied
- 26: Ritzel
- 27: Lenkgehäuse
- 28: Zahnstange
- 29: -
- 30: Torsionsstab
- 31: Stift
- 32: Endring

## Patentansprüche

1. Drehschieberventil für Hilfskraftlenkungen von Kraftfahrzeugen, mit einem ersten Ventilelement (4), das mit einem Ventil-Eingangsglied (23) drehfest verbunden ist, und mit einem zweiten Ventilelement (7), das mit einem Ventil-Ausgangsglied (25) drehfest verbunden ist,
- wobei das erste Ventilelement (4) mit dem Ventil-Ausgangsglied (25) über einen Torsionsstab (30) und über eine Totgangkupplung (24) verbunden ist,
- wobei die beiden Ventilelemente (4, 7) in einem Ventilgehäuse (2) koaxial ineinander beweglich angeordnet sind und maximal um den Verdrehweg der Totgangkupplung (24) relativ zueinander verdrehbar sind und
- wobei das radial außenliegende Ventilelement (4) innenliegende und das radial innenliegende Ventilelement (7) außenliegende, wenigstens teilweise in ihrer axialen Länge begrenzte, Steuer-Längsnuten (20, 21) aufweisen, die miteinander zusammenwirken zur Steuerung eines Druckmittels zu und von zwei Arbeitsräumen (13, 14) eines Servomotors (15),
dadurch **gekennzeichnet,**
- daß das erste Ventilelement als radial außenliegender Drehschieber (4) eine Axialbohrung (6) aufweist, in der das zweite Ventilelement als radial innenliegende Steuerbüchse (7) geführt ist und
- daß die Steuerbüchse (7) aus einem spanlos hergestellten Teil besteht.

2. Drehschieberventil nach Anspruch 1, dadurch **gekennzeichnet,** daß die Steuerbüchse (7) mit ihren Steuer-Längsnuten (21) und ihren Steuerkanten durch Kaltumformen gefertigt ist.

3. Drehschieberventil nach Anspruch 2, dadurch **gekennzeichnet,** daß die Steuerbüchse (7) an ihrem einen Ende in einer Axialbohrung des Ventil-Ausgangsgliedes (25) aufgenommen und durch einen Stift (31) in seiner Position gehalten ist.

4. Drehschieberventil nach einem der Ansprüche 1 bis 3, dadurch **gekennzeichnet,** daß die Totgangkupplung (24) durch eine Innenverzahnung des Drehschiebers (4) und eine Außenverzahnung des Ventil-Ausgangsgliedes (25) gebildet ist.

5. Drehschieberventil nach einem der Ansprüche 1 oder 2, dadurch **gekennzeichnet,** daß der Drehschieber (4) an seiner äußeren Mantelfläche Ringnuten (8, 10, 11) aufweist, die durch Dichtringe (16) abgedichtet sind.

6. Drehschieberventil nach einem der Ansprüche 1 oder 2, dadurch **gekennzeichnet,** daß die radial innenliegenden Steuer-Längsnuten (20) des Drehschiebers (4) und die Innenverzahnung der Totgangkupplung (24) durch Kaltumformen hergestellt sind.

7. Drehschieberventil nach Anspruch 5, dadurch **gekennzeichnet,** daß der Drehschieber (4) in dem Ventilgehäuse (2) durch zwei Wälzlager (17, 18) gelagert ist.

## Claims

1. Rotary slide valve for power-assisted steerings of motor vehicles, with a first valve element (4) which is connected to a valve inlet component (23) so as to be incapable of relative rotation, and with a second valve element (7) which is connected to a valve outlet component (25) so as to be incapable of relative rotation,
- the first valve element (4) being connected to the valve outlet component (25) through a torsion rod (30) and a backlash coupling (24),
- the two valve elements (4, 7) being disposed coaxially within a valve chamber (2) so as to be capable of movement one within the other and their maximum twisting capability relative to each other being the torsional displacement of the backlash coupling (24) and
- the radially outer valve element (4) possessing inner longitudinal control grooves (20, 21) and the radially inner valve element (7) possessing outer longitudinal control grooves (20, 21) which are limited, at least partially, in their axial length and which act together to control a pressure medium to and from two working chambers (13, 14) of a servomotor (15),
characterized in that
- the first valve element, as an axially outer rotary slide valve (4), includes an axial bore (6) within which is guided the second valve element, as a radially inner control bushing, and in that
- the control bushing (7) consists of a part produced without cutting.

2. Rotary slide valve according to Claim 1, characterized in that the control bushing (7), together with its longitudinal control grooves (21) and its control edges, is produced by cold forming.

3. Rotary slide valve according to Claim 2, characterized in that one end of the control bushing (7) is contained within an axial bore of the valve outlet component (25) and held in position by a pin (31).

4. Rotary slide valve according to any one of Claims 1 to 3, characterized in that the backlash coupling (24) is formed by an inner toothing of the rotary slide valve (4) and an outer toothing of the valve outlet component (25).

5. Rotary slide valve according to either of Claims 1 or 2, characterized in that the outer surface of the rotary slide valve (4) has annular grooves (8, 10, 11) which are sealed by sealing rings (16).

6. Rotary slide valve according to either of Claims 1 or 2, characterized in that the radially inner longitudinal control grooves (20) of the rotary slide valve (4) and the inner toothing of the backlash coupling (24) are produced by cold forming.

7. Rotary slide valve according to Claim 5, characterized in that the rotary slide valve (4) is mounted within the valve chamber (2) by means of two rolling bearings (17, 18).

## Revendications

1. Soupape à tiroir rotatif pour directions assistées de véhicules à moteur, comportant un premier élément de soupape (4), qui est solidaire en rotation d'un organe d'entrée de soupape (23), et un second élément de soupape (7) qui est solidaire en rotation d'un organe de sortie de soupape (25),
- où le premier élément de soupape (4) est relié à l'organe de sortie de soupape (25) au moyen d'une barre de torsion (30) et d'un accouplement à course morte (24),
- où les deux éléments de soupape (4, 7) sont disposés coaxialement et mobiles l'un par rapport à l'autre dans un corps de soupape (2) et peuvent présenter, l'un par rapport à l'autre, une rotation relative au maximum égale au jeu de rotation de l'accouplement à course morte (24), et
- où l'élément de soupape (4), situé radialement à l'extérieur, comporte à l'intérieur, et l'élément de soupape (7), situé radialement à l'intérieur, comporte à l'extérieur, des rainures longitudinales de commande (20, 21) qui sont au moins partiellement limitées dans leur longueur axiale et coopèrent pour commander un fluide de pression à destination et en provenance de deux chambres de travail (13, 14) d'un servomoteur (15),
**caractérisée**
- en ce que le premier élément de soupape, formé par un tiroir rotatif (4) situé radialement à l'extérieur, comporte un alésage axial (6) dans lequel est guidé le second élément de soupape formé par une douille de commande (7) située radialement à l'intérieur, et
- en ce que la douille de commande (7) consiste en une pièce fabriquée sans enlèvement de copeaux.

2. Soupape selon la revendication 1, **caractérisée** en ce que la douille de commande (7), avec ses rainures longitudinales de commande (21) et ses arêtes de commande, est usinée par formage à froid.

3. Soupape selon la revendication 2, **caractérisée** en ce qu'une extrémité de la douille de commande (7) est logée dans un alésage axial de l'organe de sortie de soupape (25) et fixée en position au moyen d'une cheville (31).

4. Soupape selon l'une des revendications 1 à 3, **caractérisée** en ce que l'accouplement à course morte (24) est formé par une denture intérieure du tiroir rotatif (4) et une denture extérieure de l'organe de sortie de soupape (25).

5. Soupape selon la revendication 1 ou 2, **caractérisée** en ce que le tiroir rotatif (4) comporte sur sa surface périphérique extérieure, des rainures annulaires (8, 10, 11) dont l'étanchéité est assurée par des joints annulaires.

6. Soupape selon la revendication 1 ou 2, **caractérisée** en ce que les rainures longitudinales intérieures de commande (20) du tiroir rotatif (4) et la denture intérieure de l'accouplement à course morte (24) sont réalisées par formage à froid.

7. Soupape selon la revendication 5, **caractérisée** en ce que le tiroir rotatif (4) est monté dans le corps de soupape (2) au moyen de deux roulements (17, 18).
